# EUROPEAN PATENT APPLICATION

(11) **EP 2 624 584 A1**
(43) Date of publication of application: **07.08.2013**
(21) Application number: 12153978.7
(22) Date of filing: 06.02.2012
(51) Int. Cl.: H04N 21/462, H04N 21/418, H04N 21/4623, H04N 21/4627, H04N 21/434, H04N 21/4402

(54) **A system for receiving and presenting conditional access digital streaming content**

(71) Applicant: SmarDTV S.A., 1033 Cheseaux-sur-Lausanne (CH)
(72) Inventor: Deprez, Olivier, 13600 La Ciotat (FR)
(74) Representative: Leman Consulting S.A.

(57) **Abstract**

The present invention allows for a conditional access broadcast media reception and viewing device cooperating with a conditional access module according to a common interface protocol to be used to present further media retrieved from an internet protocol network. The invention includes an HTTP streaming adaptor client running on the conditional access module cooperating with a file request resource to control a file retriever on the host device to adapt requests for parts of the internet protocol media content based on usable bandwidth of the IP receiver and on player commands associated with the playback of the IP media.

## Description

### TECHNICAL DOMAIN

The present invention pertains to the domain of digital media streaming, especially adaptive streaming and is of particular pertinence when applied to conditional access modules and their associated digital television receivers.

### STATE OF THE ART

With so much digital television content becoming available over the Internet, digital television sets adapted to be able to pull such content from the Internet are now becoming available.

Providers of digital content who make such content available over the internet may do so using so called adaptive streaming techniques whereby a single piece of content may be encoded several times at different bit-rates and stored in multiple content files in order for a client to be able to select from which file to receive the content, depending on the currently available bandwidth of the reception channel. Adaptive streaming techniques allow for the client to select a new bit-rate at predetermined positions within a transmission according to fluctuations in available bandwidth during delivery of a piece of content. In order to facilitate this it is usual for the content files corresponding to the different bit-rates to be split into a number of chunks in such a way that chunk boundaries are aligned for all of the files.

In Indian Patent Application Number 2011CH02145, Publication Number 02145CH2011, methods for achieving distribution of content via media-over-HTTP streaming technology are disclosed. In order to avoid discontinuities in the quality of video received during streaming due to variations in available bandwidth during the transmission, this document proposes the use of adaptive streaming techniques whereby chunks or segments of content are prepared at a number of different qualities and stored for delivery over HTTP. The amount of available bandwidth is monitored during the delivery and this awareness is used to control the selection of which particular quality of chunks or segments of media are delivered at a particular time.

This technique allows for better file-handling capabilities of the potentially very high number of files (chunks or segments) of various qualities by taking into account the inter-relationship between the files and caching them within a network of intermediate servers. However this document does not disclose any solution to particular problems related to the use of such adaptive streaming techniques within a TV broadcast context.

It is worth noting at this point that the term "file", as used in the present application, may refer equally to entire content files, one or more chunks from a content file or one or more segments from a content file.

Instead of preparing a number of files each representing the complete content but at various bit-rates, thereby corresponding to different qualities of the content, other techniques exist where a number of files are prepared according to techniques known in the domain of scalable content transmission. This technique is disclosed in European Patent Application Publication Number 2360923, resulting in client devices receiving a base layer, providing the content at a basic quality, and further receiving at least one enhancement layer, which may be combined with the base layer to provide an improved quality of the content.

Neither of the two above documents however allow for particular considerations related to problems which arise in the context of conditional access to content to be realised.

United States Patent Application Publication Number 2010/239090 discusses the prevention of theft of protected IPTV content, i.e. content which is transmitted via the Internet but which should be protected. The subject is presented against a background of traditional content protection schemes whereby encrypted content is received from a transport stream and decrypted by a set-top box (STB) or other such dedicated device at a customer's premises. A problem is revealed whereby with the advent of IPTV, content may now be delivered to remote devices such as personal computers or mobile devices via the Internet, and therefore the protection provided by the STB connected to a television set is lost. The solution proposed in this document is to provide a conditional access device (CAD) in the form of a portable thumb drive or memory stick which is connectable to a PC via a standard USB interface. When connected to a personal computer, the CAD launches an application on the computer to perform the conditional access functions that would otherwise have been performed by the STB in the traditional STB-TV arrangement. The document mentions that an STB and TV may be included in the system, but this works in the traditional manner in that it is used to decode a transport stream: the PC-CAD combination is used to handle the protected IPTV content. Nothing is taught in the document concerning how to use the TV in combination with the STB to give access to the protected IPTV content whether in an adaptive streaming mode or otherwise.

### BRIEF SUMMARY OF THE INVENTION

The following description uses the terms transport streams and tracks, which are based on the generally accepted notions as used in the MPEG standard in the domain of broadcast systems. A transport stream is a standard format for transmission and storage of digital media such as audio, video, programme and system data and the like. A transport stream may carry a plurality of programmes described by a programme association table. A transport stream may comprise a plurality of elementary stream tracks such as a video track or an audio track. Other types of track exist such as a subtitle track or a file track. A programme may be coded across a plurality of tracks, for example a programme can be coded across a video track and an audio track in order to be able to present both audio and video of a broadcast programme content. A file track on the other hand could have both audio and video of a particular IP content coded within it. A subtitle track may have just text.

In the context of IP content, generally made available via live streaming or adaptive streaming techniques, the notion of chunks of content is used. A transport stream is stored as a file on a network and chunks of the file are retrieved as required. In adaptive streaming, several different files are stored on the network, each file representing the same content at different qualities or bit-rates. Chunks may be taken from different files representing the same content at different rates. This is facilitated by the fact that the various chunk files are prepared such that chunk boundaries are aligned for all files.

HTTP adaptive streaming techniques are not yet standardised and so there is some uncertainty as to which of the many available solutions may form the basis of a possible convergence. Digital television manufacturers therefore may be reluctant to commit to one of the available solutions or to include several of the solutions in their television sets. The present invention therefore provides a way for the HTTP adaptive streaming functions to be integrated into a Common Interface Conditional Access Module (CICAM) configured for use with a digital television reception host device adapted to receive content from the Internet, thus allowing the CICAM to receive and properly decode HTTP adaptive streaming content.

Content which is available via HTTP adaptive streaming is increasingly provided in a file format based on the ISO Base Media File Format, as specified in ISO/IEC 14496-12, otherwise known as ISOBMFF. The format known as MP4FF is an example of an ISOBMFF. Other formats such as ISO/IEC 14496-14 exist. The present invention provides for a method and a device for passing an ISOBMFF file over the Transport Stream Interface of a Common Interface Plus (Cl+) interface between a television receiver host device and a Common Interface Conditional Access Module and for decrypting the ISOBMFF content. Other embodiments of the present invention allow for the same goals to be achieved in a system where the interface between the host and the Conditional Access Module is configured to operate according to a standard other then the Cl+ Standard, such as for example a DTCP-IP standard within a Home Network. Similarly, embodiments of the invention may be deployed in a system where the format or container used for the adaptive streaming is a different format from ISOBMFF.

As is known in the domain of broadcast of audio/video content, and especially where such content is subject to conditional access protection, a provider broadcasts an encrypted version of the content to a plurality of consumers and further broadcasts information which will allow authorised consumers to be able to decrypt the content. It is usual for an authorised consumer of the content to avail himself of an apparatus comprising a broadcast receiver to receive the broadcast content. The apparatus is called a host device. In order to decrypt the content, the user has a conditional access module, usually comprising a security module for holding secret information such as decryption keys. The conditional access module is removably connectable to the host device via an interface which could be of any of the known standards, such as Cl+, which includes a command interface and a transport stream interface. According to the present invention, a second receiver is present in the host device over and above the broadcast receiver, or first receiver. The second receiver is for receiving a second content from a second network other than the broadcast network. The second network could be a file server on the internet or generally any network storing files comprising the conditional access content. The second receiver could therefore be an internet protocol receiver to retrieve content from an internet protocol network. By retrieve it is meant that a targeted piece of content is pulled, usually by issuing a reference to that content, such as by an address or a URL.

According to a first aspect of the present invention, there is provided a system for receiving and presenting media content, the system comprising a host device and a conditional access module configured to be connected to the host device, the connection comprising a transport stream interface and a command interface;
the host device being configured to send a first transport stream comprising at least one first transport stream track via the transport stream interface and to receive, via the transport stream interface, a second transport stream comprising at least one second transport stream track representative of the media content, the host device comprising:
a broadcast receiver to receive a broadcast signal from a broadcast network and to decode the broadcast signal to give the first transport stream track; and
a media player, responsive to at least one player command from an application, to select and play the second transport stream track thereby presenting the media content;
the system **characterised in that**:
the first transport stream further comprises a first transport stream file track;
and in that the host device further comprises:
   a second receiver to receive content from a second network; and
   a file retriever to retrieve upon request, via the second receiver, at least one chunk of an unprocessed version of the media content from at least a first file comprising a plurality of chunks of the unprocessed version of the media content and to insert the retrieved chunk into the first transport stream file track thereby building a transport stream file representative of the unprocessed version of the media content, the file retriever being configured to receive the request via the command interface;
and further in that the conditional access module further comprises:
a processing module configured to process the transport stream file received in the first transport stream file track and to insert the processed transport stream file into the second transport stream track; and;
a streaming client configured to generate at least one request based at least on the player command and to send the request via the command interface.

According to a second aspect of the present invention, there is provided a host device for receiving and presenting media content, the host device comprising:
a transport stream interface;
a command interface;
a broadcast receiver to receive a broadcast signal from a broadcast network and to decode the broadcast signal to give the first transport stream track; and a media player, responsive to at least one player command from an application, to select and play the second transport stream track thereby presenting the media content;
the host device being configured to send a first transport stream comprising at least one first transport stream track via the transport stream interface and to receive, via the transport stream interface, a second transport stream comprising at least one second transport stream track representative of the media content, the host device
**characterised in that:**
a second receiver configured to give the host device access to a second network; and
a file retriever to retrieve upon request, via the second receiver, at least one chunk of an unprocessed version of the media content from at least a first file comprising a plurality of chunks of the unprocessed version of the media content and to insert the retrieved chunk into the first transport stream file track thereby building a transport stream file representative of the unprocessed version of the media content, the file retriever being configured to receive the request via the command interface.

According to a third aspect of the present invention, there is provided a conditional access module to decrypt encrypted media content, the conditional access module comprising:
a transport stream interface; and
a command interface;
the conditional access module **characterised in that**:
the conditional access module is configured to receive a first transport stream
file track via the first transport stream interface;
and in that the conditional access module further comprises:
a decryption module configured to decrypt the transport stream file received in the first transport stream file track, the transport stream file representative of the encrypted media content, and to insert the decrypted transport stream file into the second transport stream track; and
a streaming client configured to generate at least one request to retrieve at least part of the transport stream file, the request based at least on at least one player command and comprising information to identify the part of the first transport stream file, the request being sent via the command interface.

According to a fourth aspect of the present invention, there is provided a method for receiving and presenting media content, the method using a host device and a conditional access module, the host device comprising a media player to present the media content, the host device and the conditional access module configured to communicate with each other via a transport stream interface and a command interface, the method comprising:
retrieving upon request, at least one chunk from at least one file representing an unprocessed version of the media content;
creating a transport stream file by inserting the retrieved chunk into a transport stream file track within a first transport stream;
sending the first transport stream to the conditional access module via the transport stream interface;
decrypting the transport stream file track in the conditional access module to give a decrypted transport stream file representative of the media content;
inserting the decrypted first transport stream file into a second transport stream track in a second transport stream;
sending the second transport stream to the host device via the transport stream interface;
presenting the second transport stream track using the media player, the presentation controlled by at least one player command;
generating the request in a streaming client in the conditional access module, the request being based on at least the player command and a feedback indicating a bandwidth availability for the retrieval of the chunk.

It is therefore an aim of the present invention to provide a method and a system for receiving encrypted content through HTTP adaptive streaming in a host device, passing the received content to a Common Interface Conditional Access Module for decryption and receiving the decrypted content in the host device for display. It is a further aim of the present invention that such a process be able to be realised using equipment which is dedicated to receiving broadcast media content rather than a general purpose computing device. Thanks to the present invention, with a small modification to a standard digital TV receiver and a small modification to a standard Conditional Access Module as generally used in the pay-TV industry, the equipment can be rendered capable of receiving and presenting security protected digital content by adaptive streaming techniques from the internet.

### BRIEF DESCRIPTION OF THE DRAWINGS

The present invention will be better understood thanks to the detailed description which follows and the accompanying drawings, which are given as non-limiting examples of embodiments of the invention, namely:
Fig. 1, showing a schematic diagram of a system in which an embodiment of the present invention may be deployed;
Fig. 2, showing a plurality of files storing chunks of a given content, each file having the content of different qualities or bit-rates;
Fig. 3, showing a schematic of a system in which another embodiment of the present invention may deployed, this embodiment comprising a link protection to protect the IP content between the conditional access module and the host.;
Fig. 4, showing a schematic of the system of Fig. 1 in more detail; and
Fig. 5, showing another system in which a further embodiment of the present invention may be deployed.

### DETAILED DESCRIPTION

Embodiments of the present invention are applicable in the domain of transmission of digital content subject to conditional access restrictions and may find use in a system comprising a host device, such as a digital television receiver/decoder/viewer, connected to a conditional access module (CAM) where the host device transfers digital content, usually received via a broadcast reception channel, for processing, to the CAM over a transport stream (TS) interface operating according to the Common Interface protocol or Cl+ protocol. Such CAMs are generally known as CICAMs. CICAMs are usually removably connectable to their host devices and may be of a physical format which is compatible with the PCMCIA specification. Embodiments of the present invention can be practiced when such apparatus is fitted with a further reception channel allowing for the reception of content in a file format from a separate network.

By digital content it is meant to include any of the known media content such as audio/video content, pictures, text, audio, games, applications etc. Such content is usually encrypted or otherwise protected and requires to be decrypted, usually for a fee. Upon payment of a fee, by a user, to a content provider, the user will be given access to decryption keys for decrypting the content. The decryption keys are usually stored on a security device which may be either permanently attached to the conditional access module or removably connectable to the conditional access module. The security module deals with security procedures such as authentication and supplying decryption keys.

As is known in the domain of downloading of content from the Internet, if a user connects to an Internet Service Provider (ISP) at a bit-rate of 3Mbps for example, this does not necessarily mean that the user will enjoy a communication bandwidth of 3 Mbps during the whole of the time over which the download progresses. The available bandwidth may, and indeed does, vary, such variation being based, among others, on the network conditions. As the network conditions fluctuate over the duration of the download, during a streaming session where the content is video content for example, which the user tries to view at the same time as the content is downloading, this variation causes the video quality to fluctuate. Adaptive streaming techniques are used to alleviate this problem. Adaptive streaming includes any of the techniques which allow for the adjustment of the quality of content received during a transmission, such as a video content for example, to be adjusted during the delivery. The adjustment is dictated at the receiving end, where the network and/or system conditions are progressively monitored, and is based on the current conditions. When the current conditions are favourable, higher quality content may be received, while during unfavourable conditions, it is only possible for a lower quality version of the content to be received. In adaptive streaming, the content therefore needs first to be prepared by encoding it a number of times to give a plurality of versions of the same content but at different qualities or bit-rates, the higher qualities requiring to be transmitted at higher bandwidths than the lower qualities. Each version of the content is divided into a plurality of chunks or segments with each chunk comprising content information representing a specific time period. By monitoring the current conditions directly or indirectly during the progress of the download, the receiver can select, for each time period, the appropriate version of the content to receive. The content can be readily reconstructed since, in preparing the various chunk files, care has been taken to make sure that the chunk boundaries are aligned for all of the files.

Content which is available via HTTP adaptive streaming is increasingly provided in a file format based on the ISO Base Media File Format, as specified in ISO/IEC 14496-14, otherwise known as ISOMBFF. Other formats such as ISO/IEC 14496-14 exist, otherwise known as MP4FF.

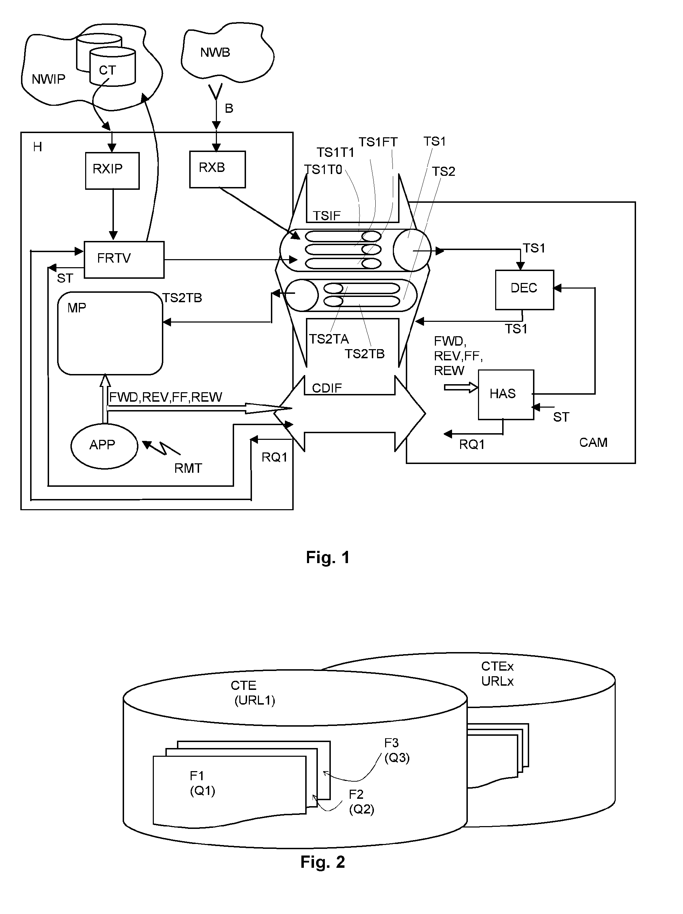

Fig. 1 shows a schematic diagram of a system in which an embodiment of the present invention may be deployed. The system comprises a host device (H), configured to receive a first digital content from a first network, such as a broadcasting network for example (NWB), via a first channel. Broadcasting networks may include any of the traditional broadcasting networks known in the field of broadcasting and can further include the known multicasting distribution networks where one provider provides content for simultaneous consumption to a plurality of users. This first digital content is referred to as broadcast content. It may be received from an antenna, from internet, from a cable, from a satellite etc.

The host device (H) may be Cl+ compliant. Cl+ is a common interface digital interconnect standard widely used in the domain of digital video broadcast. The standard allows for broadcasters to use modules containing solutions from different suppliers in the same broadcast system and includes specifications relative to connections between a host device such as a set-top box or digital television and a module such as a conditional access module commonly found in systems compatible with Pay-TV schemes. The standard describes, among others, a control interface for commands to pass between the host and the module and a transport stream interface for scrambled or encrypted content to pass from the host to the module and for descrambled or decrypted content to pass back from the module to the host.

According to the embodiment of the invention, the host (H) further comprises a second channel, or internet protocol channel, through which it may receive further digital content from a second network, an IP network for example. The reception of the files is done in a particular manner as will be described later. Indeed, according to embodiments of the present invention content is retrieved chunk by chunk from one file or from a plurality of files from the network on behalf of an adaptive streaming client. It will be seen that the adaptive streaming client runs on the conditional access module and sends commands back to the host. The received further digital content is processed and the thus processed further digital content is presented for use (viewing). The content may be audio/video content for example. Generally the content is received in encrypted format and the processing includes decryption so that the user may be presented with clear content for viewing.

The received first digital content may require to be pre-processed, by filtering or otherwise decoding, in order to produce a convenient transport stream. Generally a transport stream comprises an audio track and a video track of a selected broadcast or VOD (Video on Demand) for example. The audio or the video tracks are just two examples of types of transport stream tracks which may exist. In Fig. 1 the receiver RXB represents all the functionality required to receive, demodulate and prepare the broadcast content to be inserted into one or more tracks of a transport stream to be sent to the module via the transport stream interface. As will be seen later, a transport stream may further comprise other types of track.

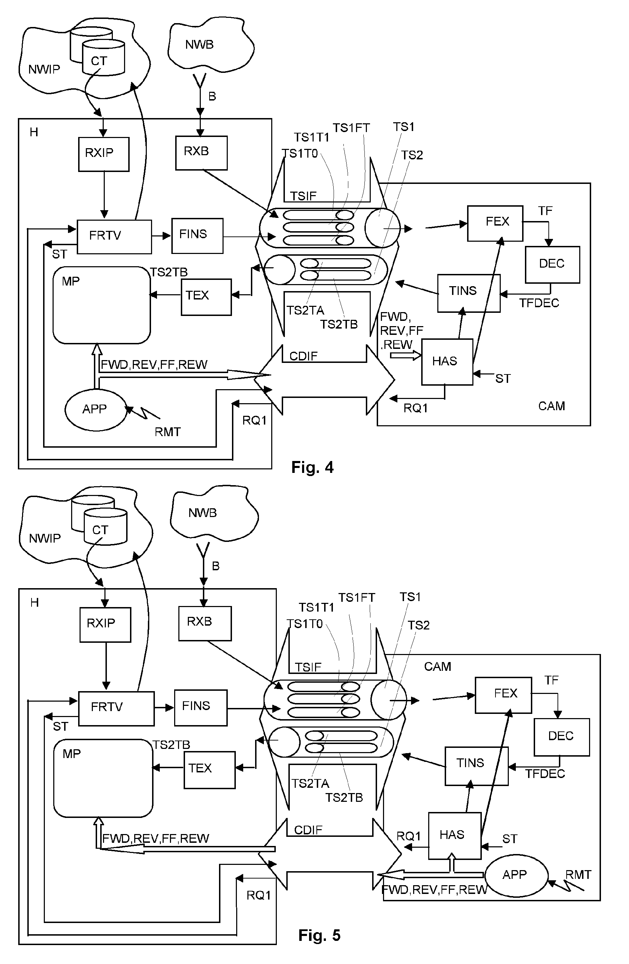

As shown in Fig. 1, the system further comprises a conditional access module (CAM) configured to communicate with the host device (H) via a transport stream interface (TSIF) and a command interface (CDIF). The transport stream interface may be regarded as two transport stream interfaces: one for content going from the host to the module and one for content returning from the module to the host; however in this description we refer to a single bidirectional transport interface. We mean bidirectional in the sense that transport streams go in both directions, however each individual transport stream only goes one way: a first transport stream going from the host to the module and a second transport stream going from the module to the host. The conditional access module (CAM) may be a CICAM as described above. The conditional access module comprises decryption means. It receives encrypted content in a first transport stream (TS1) via the transport stream interface (TSIF) and delivers decrypted content in a second transport stream (TS2) via the transport stream interface (TSIF). The host has a media player (MP) to play the content. The media player plays the content by selecting the appropriate track from the received second transport stream. Fig. 4 shows the embodiment in a little more detail, where a separate track extractor (TEX) is shown in front of the media player to extract a selected track. The skilled person will realise that such extraction functions may easily be included in the media player.

As previously mentioned, the host further comprises a second channel, for example an Ethernet connection or a WiFi connection, via which it can receive a second digital content from an IP network or WAN for example. According to a preferred embodiment, the second channel operates as a TCP/IP Stack, which can use protocols such as HTTP, FTP, POP3, SMTP or telnet for example. The host device (H) is therefore able to retrieve content from the IP network via this second channel. According to the embodiment the host device (H) comprises an HTTP file retriever (FRTV) whose functions include receiving requests for files or chunks of content from files and retrieving the chunks from those files, identified by a URL, from the Internet (or WAN) via the second channel. The host device is configured to insert the retrieved chunks progressively, chunk by chunk, into a file track within the first transport stream, thereby constructing a transport stream file (TF) within the first transport stream. Fig. 4 shows more detail whereby the function of inserting the chunks into the file track of the first transport stream to make the transport stream file is undertaken by a file inserter module (FINS). The skilled person will however realise that the file retriever (FRTV) may also comprise this functionality.

According to embodiments of the present invention, a file request protocol is established which allows the conditional access module (CAM) to request the host device (H) to get a file. A file request resource, whose function it is to make a request to the host for required files (i.e. to the HTTP file retriever), is present within the system. This resource could be represented by hardware in the CAM or in the host, by software in the CAM or in the host or by any combination of the above. The requested file is identified by its URL and the host device is therefore able to fetch it from the WAN, chunk by chunk.

In response to the request, the conditional access module (CAM) receives a first programme and a second programme from the host device (H) via the transport stream interface (TSIF). The first programme comprises at least one transport stream track in the transport stream received from the host device. In practice however, the first programme comprises an audio track and a video track from the received transport stream. The second programme is comprised in another track from the transport stream, known as a file track. The file track represents the content that the host pulled from the WAN, i.e. the requested programme. The conditional access module (CAM) further comprises a file extractor (FEX) to extract the file track from the first transport stream and yet further comprises an embedded HTTP Adaptive Streaming Client (HAS). It is the Adaptive Streaming Client (HAS) which informs the file request resource when to request a file from the host device and which particular file to request, using its URL. Such requests will depend on one hand on the current conditions, i.e. the network conditions and/or the system conditions, either indirectly derived or directly observed. The Adaptive Streaming Client therefore monitors the system and the network conditions in order to be able to request, via the file request resource, which particular chunk from the set of files of various qualities at the requested URL should be pulled. The file request resource passes the request to the HTTP file retriever. The Adaptive Streaming Client receives controls, via the command interface (CDIF), from an application (APP) which runs on the host device (H), for example an HTML or other suitable application. The application (APP) gives instructions depending on what the user wants to view and when i.e. instructions related to PLAY, PAUSE and speed variations etc (known as player commands) and either referring to which content to manipulate or implicitly referring to a current content being played. These instructions are the ones used by the media player (MP) to allow the user to view the content. Preferably these instructions may be delivered to the application by the user via a remote control device (RMT). The Adaptive Streaming Client (HAS) monitors the file extractor (FEX) to keep track of when a chunk boundary will be reached in order to be able to inform the file request resource to pull the next chunk. Similarly, it gives instructions to the track inserter (TINS) as to how to assemble the second transport stream. In some embodiments it is necessary to build the second transport stream in conformance with an MPEG2 transport stream format for example, since in its current definition, the Cl+ interface only supports this format. Since the retrieved files may be of an ISOBMFF format, the extraction of the tracks involves allocating dedicated PIDs for the MPEG2 transport stream and synchronizing track information so that accurate PCR and PTS are then used in the MPEG2 stream.

Alternatively, according to another embodiment of the present invention, the application may run in the conditional access module, with viewing-related instructions to the media player in the host device being passed via the command interface.

It is worth noting that the HTTP Adaptive Streaming Client may function according to any of the acceptable protocols known, such as a Standard which is becoming more and more widely used for transmitting MPEG data by Dynamic Adaptive Streaming Over HTTP otherwise known as DASH or MPEG DASH. As mentioned, the container of the content can have a format adhering to the ISO Base Media File Format, as specified in ISO/IEC 14496-14, otherwise known as ISOMBFF. Other formats such as ISO/IEC 14496-14 exist, otherwise known as MP4FF. Other acceptable protocols according to which the HTTP Adaptive Streaming Client may function include Adaptive HTTP Streaming (AHS), Dynamic HTTP Streaming, HTTP Live Streaming, and Smooth Streaming.

The streaming client (HAS) receives feedback (ST) related to the status of the reception network from where the file is being retrieved (the IP network). The status of the reception network, including an indication of available bandwidth, is indirectly derivable in the following manner. For example, the Adaptive Streaming Client may store parts of the transport stream file ahead of time (either before decryption or after decryption) in a buffer in the conditional access module. When the buffer becomes full (overflows or goes above a predetermined upper threshold), meaning that the system pulls content faster than it is processed (decoded or decrypted), then this would be a phenomenon which could trigger a switch to a better content quality i.e. the content at a higher bit-rate, thus taking advantage of the available bandwidth (since the buffer is being filled quickly, this is an indication that a higher bandwidth is indeed available). Conversely, when the buffer becomes empty (underflows or goes below a predetermined lower threshold), meaning that the system is pulling content slower than it is decoded or decrypted, then this would be a phenomenon which could trigger a switch to a lower content quality and hence a lower bit-rate, thereby accommodating for the lower available bandwidth evidenced by the lack of ability to keep the buffer sufficiently filled. The feedback (ST) therefore comprises information received directly from within the CAM from a buffer or from the decoder for example or from any place where such buffering is carried out, informing of possible indications related to potential bandwidth. In other words the feedback (ST), indicating current bandwidth or potential bandwidth availability at the second receiver, is derived from buffer regulation means within the conditional access module. By buffer regulation means it includes a buffer to store at least part of the transport stream, file either as it comes in via the first transport stream interface or after it has been processed in the CAM, and a monitor to detect when the buffer reaches a predetermined low limit or a predetermined high limit and to inform the adaptive streaming client when either of those limits have been reached. The feedback (ST) therefore comprises this information.

Fig. 4 and Fig. 5 show details of the embodiments described above, while Fig. 1 illustrates a generalised view of one of the embodiments. The skilled person will understand that the file retriever of Fig. 1 may be adapted to perform the function of Fig. 4's file inserter (FINS). Similarly, Fig.1's decryptor may be configured to perform the function of extracting the transport stream file for decryption as well as the function of inserting the decrypted file track into the second transport stream, these functions being represented by the file extractor (FEX) and the track inserter (TINS) of Fig. 4. Fig. 5 shows an embodiment where the application runs on the CAM instead of on the host device.

Fig. 2 represents the internet protocol network, with a plurality of encrypted pieces of content. Each piece of encrypted content (CTE, CTEx) is stored separately and is addressable using an identifier (URL, URLx). Each content is represented by a plurality of files (F1, F2, F3), each being encoded at different qualities (Q1, Q2, Q3). By different encoding qualities, this is meant to refer to the characterising feature that is used to allow for adaptive streaming techniques to be used to deliver the content. For example, if the adaptive streaming technique uses files of different bit-rates, then content encoded at a lower quality is taken to mean content of a lower bit-rate, while content encoded at a higher quality is content at a higher bit-rate. Content encoded at a higher quality will be perceived by the viewer as being of a higher quality than content encoded at a lower quality. On the other hand, if the technique used for adaptive streaming is one where a base layer is first transmitted and then augmented by one or more enhancement layers to provide content of varying qualities, then the term encoding quality refers to the different layers of content. The better the quality of the content as perceived by the viewer, the more enhancement layers have been used or the better the quality of the enhancement layers.

The reader is reminded that in the prior art it is usual for encrypted content to be received in the host device and decrypted in the host device using decryption keys made available thanks to the conditional access module. In the present invention, content which is received in encrypted format via the first channel (i.e. in the "normal" way) may still be decrypted in the host device using the known techniques for obtaining the decryption keys using the conditional access module. On the other hand, when content is received from the second channel (the IP channel) this content will generally be protected by digital rights management techniques. According to an embodiment of the present invention the encrypted content is sent in a file track within the first transport stream to the conditional access module and the decryption of the file track is done in the conditional access module. After adding a link protection the decrypted file (thus protected by the link protection) is sent back to the host where the protection can be removed and sent to the media player for viewing.

It is worth noting that embodiments of the present invention allow for the content received on the second channel, the IP channel, to be sent to the conditional access module without affecting the "normal" transfer of content received from the first channel (the broadcast network). This is inherent in the fact that the invention allows for the insertion of a file track of IP content into the transport stream. The normal functions of the transport stream may remain unchanged, i.e. the transport stream may still be used to transfer broadcast content from the host to the conditional access module, the broadcast content and the IP content being transferred in parallel with each other. In this manner, if the viewer were to watch the IP content on the display, then the system would still allow for the processing of the broadcast content in one of the usual ways, thus allowing for example recording of the broadcast content while viewing the IP content. According to embodiments of the present invention facilitating this method of recording broadcast content while watching IP content or vice versa, the conditional access module comprises means for decrypting the broadcast content in the manner that this is generally carried out in the state of the art in addition to the decryption means for isolating and decrypting the IP content. The decrypted file track and the decrypted transport stream tracks (audio, video and subtitle, where applicable) are combined into the second transport stream. Upon reception of the second transport stream in the host, the file track is separated from the transport stream tracks and played or recorded accordingly.

On the broadcast content side, the usual security protection known in the broadcast domain is applied i.e. using EMMs and ECMs. Generally, according to such techniques, a content key is encrypted by a domain key and distributed to all security modules. Here, access criteria are included in the content. The IP content is protected by Digital Rights Management techniques. Using these techniques, the content key is encrypted using a device key and the encrypted content key forms part of the license transmitted to the device intended to receive the content. In this case, access criteria are embedded in the license, i.e. separate from the content.

According to another embodiment, it could be considered that the processing of content received from the broadcast channel be unrelated to the processing of content received on the IP channel to the extent that the transport stream sent to the conditional access module from the host could include the IP content without any broadcast content at all. Indeed, the broadcast receiver could even be switched off or temporarily disabled, allowing the system to be used solely for presenting the IP content at least for a part of the time that the system is in use.

According to preferred embodiments of the present invention, the content retrieved from the WAN may be encrypted or otherwise protected using any of the digital rights management techniques known in the industry. In this case, the conditional access module has the necessary digital rights management agent embedded within it from which it will be able to obtain the necessary decryption keys.

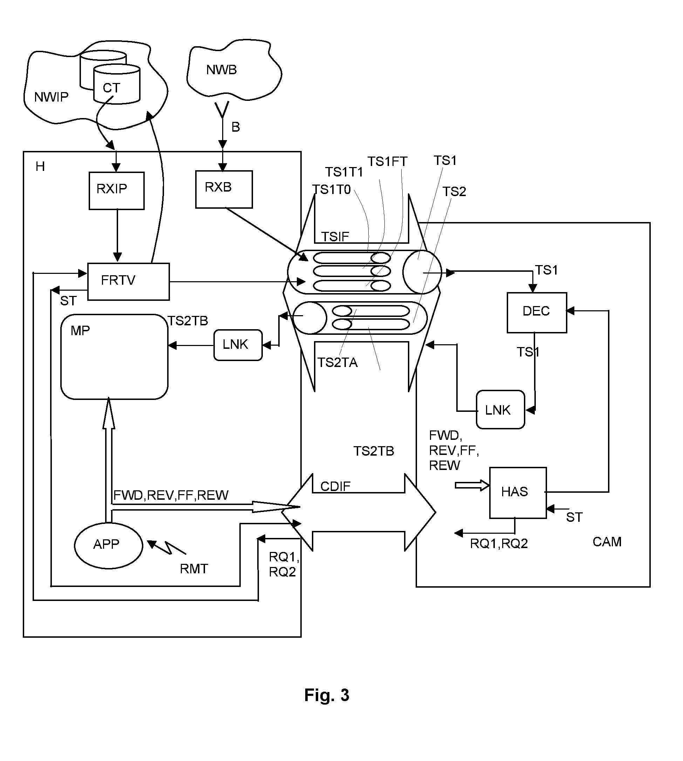

As shown in Fig. 1, Fig. 4 and Fig. 5, to close the loop, the track inserter (TINS) in the conditional access module (CAM) assembles the extracted and decrypted chunks (in the case that decryption is a desired step in the process) into a file track representing the second programme. This file track is then inserted into a second transport stream to be sent to the host device via the transport stream interface. In preferred embodiments of the present invention it is desirable to maintain high security and to maintain some form of encryption upon the content, especially at boundaries where content is being transferred from one module to another. For example, once the content is decrypted in the conditional access module and then transferred back to the host device in the second transport stream, it could be picked up at that point by an unscrupulous eavesdropper. To prevent this, the conditional access module adds a link protection (LNK), which is basically an encryption, on top of this transport stream. Once in the host device it is a simple task for the host to remove the link protection (LNK). This is illustrated in Fig. 3. Link protections such as this are known in the state of the art and may include techniques such as pairing for example.

The present invention, being aimed for use in a digital rights management environment (DRM) can be deployed within a system comprising a receiver such as a digital television set for example, coupled with a conditional access module. The conditional access module can be of a CICAM form and therefore detachable from the receiver. The coupling between the two may be made according to a standard communication protocol such as Cl+. Alternatively, the conditional access module may be a device connected somewhere on a Home Network comprising one or more receivers on which content can be received and preferably presented for viewing, the requested files being transferred between the conditional access module and the receiver by HTTP for example. The common features of these settings are that content received at the receiver may be encrypted by a content key. Each device intended to be used to decrypt the content has a device key. The content to be protected is encrypted by a particular device key, the encrypted content key being part of the license transmitted to the device. In this manner, each device has a unique license and only an authorised device will be able to find the encryption key. Access criteria also form part of the license and are not transmitted along with the content. When the decrypted content is transferred to the host device from the conditional access module it is protected by link protection. The link protection is part of the Cl+ protocol in the case of a CICAM for example or may be DTCP-IP for example in the case of a Home Network. Indeed, according to embodiments of the present invention, it is not necessary that the host and the conditional access module be connected by a Cl+ interface, since other connectivity scenarios such as Home Network DTCP-IP are possible.

In another embodiment of the present invention, the file track is structured as a carousel of files, typically a DVB DSMCC carousel. Using a carousel means that a file is always available in the "file track" in a loop until the complete file (or all of the chunks) has been successfully extracted by the CICAM (conditional access module). Hence, the real-time constraints are somewhat eased. An example of such real-time constraints is that the CICAM may miss the first appearance of the file or chunk in the carousel and would then be able to get it when it next appears. The file request resource is used by the CICAM to inform the host device that a given file or chunk has been successfully extracted from the file track and can therefore be removed from the file track.

The track inserter (TINS) (e.g. a multiplexer), which allows the muxing of the individual tracks (audio, video, sub-titles, ...), makes sure that tracks are inserted progressively so as to respect the original timing information as expressed in the original container format (MPEG2 or ISOBMFF for example).

As discussed above, container formats used in adaptive streaming techniques can conform to different standards such as ISOBMFF or MPEG2-TS for example. According to an embodiment of the present invention, the processing module (DEC) is further configured to be able to convert from one container format to another. For example, the processing module can receive the first transport stream file (TF) from the transport stream file track (TS1FT) in ISOBMFF format for example, process the transport stream file, the processing including decryption for example as in another embodiment previously discussed, and according to this particular embodiment, converting the processed file to another file format such as MPEG2-TS before inserting the thus-processed file into the second transport stream track (TS2TA, TS2TB). Indeed, conversion from any of the known formats to any other of the known formats by the processing module is possible.

## Claims

1. A system for receiving and presenting media content (CT), the system comprising a host device (H) and a conditional access module (CAM) configured to be connected to the host device (H), the connection comprising a transport stream interface (TSIF) and a command interface (CDIF);
the host device (H) being configured to send a first transport stream (TS1) comprising at least one first transport stream track (TS1T0, TS1T1) via the transport stream interface (TSIF) and to receive, via the transport stream interface (TSIF), a second transport stream (TS2) comprising at least one second transport stream track (TS2TA, TS2TB) representative of the media content (CT), the host device (H) comprising:
a broadcast receiver (RXB) to receive a broadcast signal (B) from a broadcast network (NWB) and to decode the broadcast signal (B) to give the first transport stream track (TS1 T0, TS1T1); and
a media player (MP), responsive to at least one player command (FWD, REV, FF, REW) from an application (APP), to select and play the second transport stream track (TS2TB) thereby presenting the media content (CT);
the system **characterised in that**:
the first transport stream (TS1) further comprises a first transport stream file track (TS1FT);
and **in that** the host device (H) further comprises:
a second receiver (RXIP) to receive content from a second network (NWIP); and
a file retriever (FRTV) to retrieve upon request (RQ1), via the second receiver (RXIP), at least one chunk of an unprocessed version of the media content (CTE) from at least a first file (F1) comprising a plurality of chunks of the unprocessed version of the media content (CTE) and to insert the retrieved chunk into the first transport stream file track (TS1FT) thereby building a transport stream file (TF) representative of the unprocessed version of the media content (CTE), the file retriever (FRTV) being configured to receive the request (RQ1) via the command interface (CDIF);
and further **in that** the conditional access module further comprises:
a processing module (DEC) configured to process the transport stream file (TF) received in the first transport stream file track (TS1FT) and to insert the processed transport stream file (TFDEC) into the second transport stream track (TS2TA, TS2TB); and;
a streaming client (HAS) configured to generate at least one request (RQ1) based at least on the player command (FWD, REV, FF, REW) and to send the request (RQ1) via the command interface (CDIF).

2. The system according to claim 1, wherein the application (APP) resides on the host device (H) and issues the player command (FWD, REV, FF, REW) to the streaming client (HAS) via the command interface (CDIF) and to media player (MP), the player command being issued in response to user commands received via a user interface device (RMT).

3. The system according to claim 1, wherein the application (APP) resides on the conditional access module (CAM) and issues the player command (FWD, REV, FF, REW) to the media player (MP) via the command interface and to the streaming client (HAS), the player command being issued in response to user commands received via a user interface device (RMT).

4. The system according to any of the preceding claims, wherein the request (RQ1) comprises a first identifier (URL1) and wherein the streaming client (HAS) is further configured to generate a second request (RQ2) based at least on the player command (FWD, REV, FF, REW), the second request (RQ2) comprising a second identifier (URL2), and the file retriever (FRTV) is further configured to receive a plurality of chunks of the unprocessed version of the media content (CTE), at least one chunk from a second file (F2) comprising a plurality of chunks of the unprocessed version of the media content (CTE), the first file (F1) being addressable by the first identifier (URL1) and the second file (F2) being addressable by the second identifier (URL2).

5. The system according to any of the preceding claims, wherein the conditional access module (CAM) further comprises a buffer for at least part of the transport stream file (TF) or for at least part of the processed transport stream file (TFDEC), the buffer being configured to provide a feedback (ST) to the streaming client (HAS), the feedback (ST) indicating when the buffer reaches a predetermined lower threshold or a predetermined upper threshold, the request (RQ1) being further based on the feedback (ST).

6. The system according to any of the preceding claims, wherein the unprocessed version of the media content (CTE) is an encrypted version of the media content and the processing module (DECR) is a decryption module to decrypt the first transport stream file track (TS1FT) representative of the encrypted version of the media content (CTE) and the decrypted transport stream file track (TFDEC) is representative of the media content (CT).

7. A host device (H) for receiving and presenting media content (CT), the host device comprising:
a transport stream interface (TSIF);
a command interface (CDIF);
a broadcast receiver (RXB) to receive a broadcast signal (B) from a broadcast network (NWB) and to decode the broadcast signal (B) to give the first transport stream track (TS1T0, TS1T1); and
a media player (MP), responsive to at least one player command (FWD, REV, FF, REW) from an application (APP), to select and play the second transport
stream track (TS2TB) thereby presenting the media content (CT);
the host device being configured to send a first transport stream (TS1) comprising at least one first transport stream track (TS1T0, TS1T1) via the transport stream interface (TSIF) and to receive, via the transport stream interface (TSIF), a second transport stream (TS2) comprising at least one second transport stream track (TS2TA, TS2TB) representative of the media content (CT), the host device **characterised in that:**
a second receiver (RXIP) configured to give the host device (H) access to a second network (NWIP); and
a file retriever (FRTV) to retrieve upon request (RQ1), via the second receiver (RXIP), at least one chunk of an unprocessed version of the media content (CTE) from at least a first file (F1) comprising a plurality of chunks of the unprocessed version of the media content (CTE) and to insert the retrieved chunk into the first transport stream file track (TS1FT) thereby building a transport stream file (TF) representative of the unprocessed version of the media content (CTE), the file retriever (FRTV) being configured to receive the request (RQ1) via the command interface (CDIF).

8. The host device (H) according to claim 7, wherein the unprocessed version of the media content (CTE) is an encrypted version of the media content (CT).

9. A conditional access module (CAM) to decrypt encrypted media content (CTE), the conditional access module (CAM) comprising:
a transport stream interface (TSIF); and
a command interface (CDIF);
the conditional access module **characterised in that**:
the conditional access module (CAM) is configured to receive a first transport
stream file track (TS1FT) via the first transport stream interface (TS1);
and **in that** the conditional access module (CAM) further comprises:
a decryption module (DEC) configured to decrypt the transport stream file (TF) received in the first transport stream file track (TS1FT), the transport stream file representative of the encrypted media content (CTE), and to insert the decrypted transport stream file (TFDEC) into the second transport stream track (TS2TA, TS2TB); and
a streaming client (HAS) configured to generate at least one request (RQ1) to retrieve at least part of the transport stream file, the request (RQ1) based at least on at least one player command (FWD, REV, FF, REW) and comprising information to identify the part of the first transport stream file, the request (RQ1) being sent via the command interface (CDIF).

10. The conditional access module (CAM) according to claim 9, wherein the player command (FWD, REV, FF, REW) is received via the command interface (CDIF).

11. The conditional access module (CAM) according to claim 9, wherein the player command (FWD, REV, FF, REW) is received from an application (APP) within the conditional access module (CAM) in response to a user command received via a user interface device (RMT).

12. The conditional access module (CAM) according to any of claims 9 to 11, wherein the conditional access module (CAM) further comprises a buffer for at least part of the transport stream file (TF) or for at least part of the processed transport stream file (TFDEC), the buffer being configured to provide a feedback (ST) to the streaming client (HAS), the feedback (ST) indicating when the buffer reaches a predetermined lower threshold or a predetermined upper threshold, the request (RQ1) being further based on the feedback (ST).

13. A method for receiving and presenting media content (CT), the method using a host device (H) and a conditional access module (CAM), the host device (H) comprising a media player (MP) to present the media content (CT), the host device (H) and the conditional access module (CAM) configured to communicate with each other via a transport stream interface (TSIF) and a command interface (CDIF), the method comprising:
retrieving upon request (RQ1), at least one chunk from at least one file (F1) representing an unprocessed version of the media content (CTE);
creating a transport stream file (TF) by inserting the retrieved chunk into a transport stream file track (TS1FT) within a first transport stream (TS1);
sending the first transport stream (TS1) to the conditional access module (CAM) via the transport stream interface (TSIF);
decrypting the transport stream file track (TF) in the conditional access module (CAM) to give a decrypted transport stream file (TFDEC) representative of the media content (CT);
inserting the decrypted first transport stream file (TFDEC) into a second transport stream track (TS2TA, TS2TB) in a second transport stream (TS2);
sending the second transport stream (TS2) to the host device (H) via the transport stream interface (TSIF);
presenting the second transport stream track (TS2TA, TS2TB) using the media player (MP), the presentation controlled by at least one player command (FWD,REV,FF,REW);
generating the request (RQ1) in a streaming client (HAS) in the conditional access module (CAM), the request (RQ1) being based on at least the player command (FWD,REV,FF,REW) and a feedback (ST) indicating a bandwidth availability for the retrieval of the chunk.

14. The method according to claim 13, wherein a plurality of chunks are retrieved, at least one chunk from the first file (F1) addressable by a first identifier (URL1) and at least one chunk form a second file (F2) addressable by a second identifier (URL2), the request (RQ1) comprising the first identifier (URL1), the streaming client (HAS) being configured to generate a further request (RQ2) comprising the second identifier (URL2), the method comprising:
retrieving at least one chunk from the first file (F1); and
retrieving at least one chunk from the second file (F2).

15. The method according to any of claims 12 to 14, wherein the host device (H) is further configured to receive a broadcast content (B) from a broadcast network, (NWB) the method comprising:
inserting the broadcast content (B) into at least one transport stream track (TS1 T0 TS1 T1) within the first transport stream (TS1).
